# EUROPÄISCHE PATENTSCHRIFT

(11) **EP 2 646 709 B1**
(45) Veröffentlichungstag und Bekanntmachung des Hinweises auf die Patenterteilung: **24.04.2019**
(21) Anmeldenummer: 11773731.2
(22) Anmeldetag: 24.10.2011
(51) Int. Cl.: F16F 9/46, F16K 17/06, F16K 31/06

(54) **AKTUATOR FÜR EINE VERSTELLBARE DÄMPFVENTILEINRICHTUNG 1**
ACTUATOR FOR AN ADJUSTABLE DAMPER-VALVE DEVICE 1
ACTIONNEUR POUR DISPOSITIF DE SOUPAPE D'AMORTISSEMENT RÉGLABLE

(30) Priorität: 01.12.2010 DE 102010062262
(43) Veröffentlichungstag der Anmeldung: 09.10.2013
(73) Patentinhaber: ZF Friedrichshafen AG, 88046 Friedrichshafen (DE)
(72) Erfinder: FÖRSTER, Andreas, 97422 Schweinfurt (DE)
(86) Internationale Anmeldenummer: PCT/EP2011/068504
(87) Internationale Veröffentlichungsnummer: WO 2012/072338

(56) Entgegenhaltungen:
- DE-A1- 3 432 728
- DE-A1- 4 137 821
- DE-A1- 19 846 543
- DE-A1- 19 846 543
- DE-A1-102007 022 059
- US-A- 3 977 649
- US-A- 4 002 318

## Beschreibung

Die Erfindung betrifft einen Aktuator für eine verstellbare Dämpfventileinrichtung gemäß dem Oberbegriff von Patentanspruch 1.

Aus der DE 198 46 543 A1 ist für ein elektromagnetisch verstellbares Dämpfventil ein Aktuator bekannt, dessen Anker im Rahmen der Fertigung einstellbar ist, um Fertigungsabweichungen weitgehend zu kompensieren. Der Anker verfügt über einen Schieber, auf dem eine Ankerbaugruppe fixiert ist. Zur Justierung des Ankers wird der Schieber in eine definierte Lage gebracht und gehalten. Anschließend wird die Ankerbaugruppe auf dem Schieber axial bewegt, bis eine durch einen Anschlag definierte Position erreicht ist. Diese Position wird dauerhaft fixiert. Dazu kann man eine radiale Versickung oder auch eine Toleranzhülse verwenden, die zwischen dem Schieber und der Ankerbaugruppe über eine Presspassung eine axiale Haltekraft ausübt.

Aus den Figuren wird ersichtlich, dass das in der DE 198 46 543 A1 beschriebene Einstellverfahren für den Aktuator nur möglich ist, wenn die relevanten Bauteile auch gut zugänglich sind.

Aus der DE41 37 821 A1 ist ein gattungsbildender Aktuator bekannt. Dieser Aktuator verfügt über einen Stößel, der wiederum über einen Verschlussstopfen mit einer Gewindeverbindung zu einer Gehäusewandung in seiner axialen Position verstellbar ist. Über die Position des Stößels kann die Vorspannung einer den Aktuator belastenden Feder 10 eingestellt werden.

Die Aufgabe der vorliegenden Erfindung besteht darin, einen Aktuator für ein verstellbares Dämpfventil bereitzustellen, der auch bei gekapselter Bauform einstellbar ist.

Die Aufgabe wird durch die Merkmale des Patentanspruchs 1 gelöst.

Auch bei geschlossenem Aktuatorgehäuse kann die Position des Ankers eingestellt werden, da das Verstellmittel zugänglich ist. Folglich kann man in einer relativ späten Fertigungsstufe die Justierung des Ankers vornehmen.

Man muss nicht tief in das Innere des Gehäuses eingreifen, sondern kann das Verstellmittel leicht erreichen.

Im Hinblick auf ein möglichst einfaches Verstellwerkzeug für das Federlager, ist die Hülse als Klemmhülse ausgeführt.

Um eine möglichst einfach zu definierende Ausgangsposition des Ankers zu erhalten, stützt sich die Feder in einer Vormontagestellung an der Gehäusewandung ab.

Für einen insgesamt einfachen Aufbau des Aktuators und einen möglichst großen Abstand der Lagerstellen des Ventilstößels lagert das Federlager den Ventilstößel radial, so dass das Federlager eine Mehrfachfunktion ausübt.

Gemäß einem vorteilhaften Unteranspruch wird die Gehäusewandung von einem Deckel gebildet. Bei einem Deckel als Einzelteil des Aktuatorgehäuses kann man sehr einfach die Position des Federlagers kontrollieren, schon bevor man den Deckel montiert.

Es ist vorgesehen, dass die Hülse eine größere Länge aufweist als die Wandstärke der Gehäusewandung. Damit besteht in der Vormontagestellung ein axialer Überstand des Federlagers nach außen bezogen auf die Gehäusewandung, so dass ein günstiger Werkzeugzugriff besteht.

Anhand der folgenden Figurenbeschreibung soll die Erfindung näher erläutert werden.

Es zeigt:
- Fig. 1: Schnittdarstellung durch eine verstellbare Dämpfventileinrichtung
- Fig. 2: Detaildarstellung des Aktuators zur Fig. 1

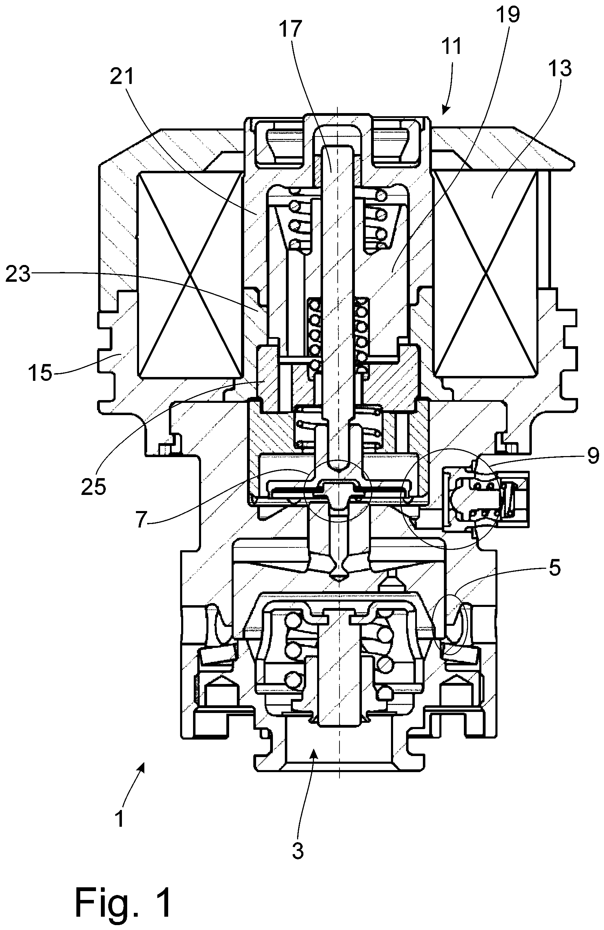

Die Figur 1 zeigt eine verstellbare Dämpfventileinrichtung 1, die ein Vorventil 3, ein Hauptstufenventil 5, ein Vorstufenventil 7 und ein Notbetriebsventil 9 umfasst. Grundsätzlich kann die verstellbare Dämpfventileinrichtung 1 auch eine andere konstruktive Ausgestaltung aufweisen.

Die Verstellfunktion wird über einen Aktuator 11 vorgenommen, der mittels einer Magnetspule 13 angesteuert wird, die in einem Gehäuse 15 der Dämpfventileinrichtung 1 angeordnet ist. Der Aktuator 11 umfasst einen bolzenähnlichen Ventilstößel 17, auf dem ein Anker 19 fixiert ist. Der Anker 19 wird von einem topfförmigen Rückschlusskörper 21 aufgenommen, der über einen magnetisch nicht leitenden Isolator 23 mit einer magnetisch leitenden Polscheibe 25 verbunden ist. Bezogen auf den Anker 19 bilden der Rückschlusskörper 21, der Isolator 23 und die Polscheibe 25 als Deckel ein Gehäuse 27.

Der Anker 19 ist mittels einer ersten Feder 29 und einer zweiten Feder 31 zwischen dem Boden 33 des Rückschlusskörpers 21 und der Polscheibe 25 verspannt. Prinzipiell würde für den Betrieb des Aktuators 11 eine einzige Feder genügen, die der Kraft der Spule 13 entgegen gerichtet ist.

Die erste Feder 29 stützt sich an einem Federlager 35 ab, das einer Durchgangsöffnung der Wandung des Gehäuses 27, nämlich dem Deckel bzw. der Polscheibe 25 angeordnet ist. Das Federlager 35 wird von einer Hülse gebildet, die in diesem Ausführungsbeispiel eine größere Länge aufweist als die Wandstärke der Gehäusewandung bzw. der Polscheibe 25. Die Hülse ist als Klemmhülse ausgeführt und in ihrer axialen Lage innerhalb der Polscheibe 25 einstellbar.

Der zentrale Ventilstößel 17 wird mittels einer Lagerhülse 37 oder direkt im Boden 33 des Rückschlusskörpers 21 radial gelagert. Das Federlager 35 bildet eine zweite Lagerhülse für den Ventilstößel 17.

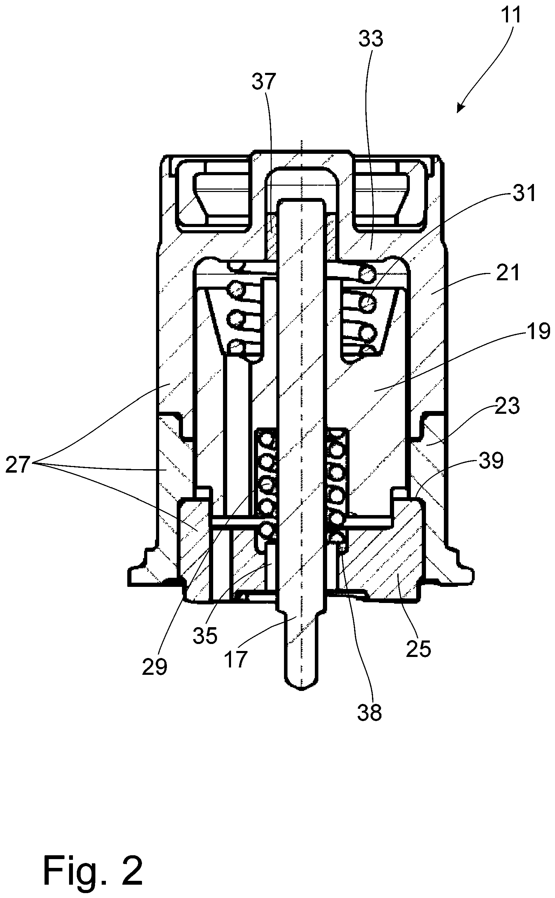

Bei der Montage wird der Anker 19 auf den Ventilstößel 17aufgepresst, bis die in der Fig. 2 dargestellte Position erreicht ist. In einem parallelen Arbeitsschritt wird die Lagerhülse 37 in den Boden 33 des Rückschlusskörpers 21 gepresst. Des Weiteren wird der Isolator 23 mit dem Rückschlusskörper 21 verbunden. Das Federlager 35 bzw. die Hülse wird in die Polscheibe 25 eingepresst. Dabei wird darauf geachtet, dass die Hülse maximal bündig mit der in Richtung des Ankers 19 weisenden Seite der Polscheibe abschließt, jedoch keinesfalls über eine Federstützfläche 38 hinaussteht. Bedingt durch die größere Länge des Federlagers 35 als die Wandung der Polscheibe 25 ragt das Federlager nach außen und ist für ein Verschiebewerkzeug zugängiglich.

Danach werden die zweite Feder 31, der Anker 19 mit dem Ventilstößel 17 und die erste Feder 29 in den Rückschlusskörper 21 eingeführt. In einem weiteren Arbeitsschritt fädelt man die Polscheibe 25 auf den Ventilstößel 17, bis die Polscheibe 25 an einem Absatz 39 des Isolators 23 anliegt. Z. B. über eine Verstemmung am Rand des Isolators 23 zur Polscheibe 25 wird eine dauerhafte Befestigung der Polscheibe erreicht. Nun liegt eine geschlossene Baueinheit in einem Vormontagezustand vor, die vor dem Einbau in die Dämpfventileinrichtung 1 justiert wird. Dabei stützt sich die erste Feder 29 unmittelbar auf der Innenseite der Polscheibe 25 auf der Federstützfläche 38 ab.

Danach wird die Baueinheit gemäß Fig. 2 mit einer nicht dargestellten Magnetspule und einem äußeren Rückschlusselement bestückt. In einem ersten Verfahrensschritt wird der Anker 19 mit einer definierten Magnetkraft beaufschlagt, so dass der Ventilstößel 17 einen maximalen Überstand zur Außenseite der Polscheibe 25 aufweist. Diese Position dient als Bezugsgröße. Danach wird mittels definiertem elektrischen Strom eine Magnetkraft erzeugt, die einen zweiten Betriebspunkt der verstellbaren Dämpfventileinrichtung 1 bewirken soll. Dieser zweite Betriebspunkt kann z. B. der Magnetkraft = 0 Newton oder auch einem anderen Wert entsprechen, wobei die Magnetkraft für eine bestimmte Stromstärke steht. In dem zweiten Betriebspunkt wird der Verstellweg des Ventilstößels 17 zum Bezugspunkt gemessen. Dabei ist durch die Dimensionierung der Vorspannung der ersten Feder und/oder deren axialen Einbauraums gewährleistet, dass der erforderliche Verstellweg des Ventilstößels gegenüber dem Bezugspunkt nicht erreicht wird. Nun wird unter Beibehaltung der definierten Magnetkrafteinstellung des zweiten Betriebspunktes ein Werkzeug eingesetzt, mit dem das Federlager 35 in der Polscheibe 25 axial in seiner Lage in Richtung des Ankers 19 verschoben wird. Nun stützt sich die erste Feder 29 nur noch am Federlager 35 ab. Dadurch werden die beiden Federn 29; 31 stärker vorgespannt und der Ventilstößel 17 nimmt die vorbestimmte Hubposition zum ersten Bezugspunkt ein. Durch die Reibkraft zwischen dem Federlager 35 und der Polscheibe 25 bleibt die Vorspannung der Federn 29; 31 über die gesamte Betriebszeit des Aktuators 11 erhalten. Alternativ kann man das Federlager 35 auch als Schraubhülse ausführen und das Verfahren ansonsten identisch durchführen.

### Bezugszeichenliste

- 1: Dämpfventileinrichtung
- 3: Vorventil
- 5: Hauptstufenventil
- 7: Vorstufenventil
- 9: Notbetriebsventil
- 11: Aktuator
- 13: Magnetspule
- 15: Gehäuse
- 17: Ventilstößel
- 19: Anker
- 21: Rückschlusskörper
- 23: Isolator
- 25: Polscheibe
- 27: Gehäuse
- 29: erste Feder
- 31: zweite Feder
- 33: Boden
- 35: Federlager
- 37: Lagerhülse
- 38: Federstützfläche
- 39: Absatz

## Patentansprüche

1. Aktuator (11) für eine verstellbare Dämpfventileinrichtung (1), umfassend einen Anker (19), der einen axialen Ventilstößel (17) umfasst, wobei mindestens eine Feder (29) den Anker (19) in eine Richtung entgegen der magnetischen Ankerkraft erzeugt durch eine Magnetspule (13) belastet, wobei die Position des Ventilstößels (17) bezogen auf eine definierte Ventilstellung der Dämpfventileinrichtung einstellbar ist, wobei sich die den Anker (19) belastende Feder (29) an einem Federlager (35) abstützt, das über eine Gehäusewandung des Aktuators (11) zugänglich und in seiner axialen Lage einstellbar ist, wobei das Federlager (35) von einer Hülse gebildet wird, die in der Gehäusewandung geführt ist
**dadurch gekennzeichnet,**
**dass** die Hülse als Klemmhülse ausgeführt ist und sich die Feder (29) in einer Vormontagestellung an der Gehäusewandung abstützt, wobei das Federlager (35) den Ventilstößel (17) radial lagert.

2. Aktuator nach Anspruch 1,
**dadurch gekennzeichnet,**
**dass** die Gehäusewandung von einem Deckel gebildet wird.

3. Aktuator nach Anspruch 2,
**dadurch gekennzeichnet,**
**dass** die Hülse eine größere Länge aufweist als die Wandstärke der Gehäusewandung.

## Claims

1. Actuator (11) for an adjustable damper valve device (1), comprising an armature (19) which comprises an axial valve tappet (17), at least one spring (29) loading the armature (19) in a direction counter to the magnetic armature force generated by a magnetic coil (13), the position of the valve tappet (17) in relation to a defined valve position of the damper valve device being adjustable, the spring (29) loading the armature (19) being supported on a spring bearing (35), which is accessible via a housing wall of the actuator (11) and is adjustable in its axial position, the spring bearing (35) being formed by a sleeve which is guided in the housing wall,
**characterized in that**
the sleeve is embodied as a clamping sleeve and, in a pre-assembly position, the spring (29) is supported on the housing wall, the spring bearing (35) supporting the valve tappet (17) radially.

2. Actuator according to Claim 1,
**characterized in that**
the housing wall is formed by a cover.

3. Actuator according to Claim 2,
**characterized in that**
the sleeve has a greater length than the wall thickness of the housing wall.

## Revendications

1. Actionneur (11) pour un dispositif de soupape d'amortissement réglable (1), comprenant une armature (19) qui comprend un poussoir de soupape axial (17), au moins un ressort (29) sollicitant l'armature (19) dans une direction à l'encontre de la force d'armature magnétique générée par une bobine magnétique (13), la position du poussoir de soupape (17) pouvant être ajustée par rapport à une position de soupape définie du dispositif de soupape d'amortissement, le ressort (29) sollicitant l'armature (19) s'appuyant contre un support de ressort (35) qui est accessible par le biais d'une paroi de boîtier de l'actionneur (11) et qui peut être ajusté dans sa position axiale, le support de ressort (35) étant formé par une douille qui est guidée dans la paroi de boîtier,
**caractérisé en ce que**
la douille est réalisée sous forme de douille de serrage et le ressort (29) s'appuie dans une position de prémontage contre la paroi de boîtier, le support de ressort (35) supportant radialement le poussoir de soupape (17).

2. Actionneur selon la revendication 1,
**caractérisé en ce que**
la paroi de boîtier est formée par un couvercle.

3. Actionneur selon la revendication 2,
**caractérisé en ce que**
la douille présente une plus grande longueur que l'épaisseur de paroi de la paroi de boîtier.
